# EUROPÄISCHE PATENTANMELDUNG

(11) **EP 0 592 359 A1**
(43) Veröffentlichungstag der Anmeldung: **13.04.1994**
(21) Anmeldenummer: 93810623.4
(22) Anmeldetag: 31.08.1993
(51) Int. Cl.: D03D 47/27, F16H 25/16

(54) **Vorrichtung zum Antreiben eines Greiferbandes und Greiferwebmaschine mit einer derartigen Vorrichtung**

(30) Priorität: 06.10.1992 DE 4233636
(71) Anmelder: SULZER RÜTI AG, CH-8630 Rüti (CH)
(72) Erfinder: Ruedi, Maurer, CH-8608 Bubikon (CH)
(74) Vertreter: Heubeck, Bernhard

(57) **Zusammenfassung**

Die Vorrichtung hat einen eine Drehbewegung ausführenden Kurventräger (4), der eine eine geschlossene Kurve (11) enthaltene Oberfläche aufweist, deren Erzeugende (E) einen Kreisbogen und einen eine Schwingbewegung ausführenden Steuerhebel (5), der mit der Kurve (11) in Eingriff und um eine Drehachse (3) schwenkbar ist, die durch den Mittelpunkt der Erzeugenden (E) verläuft.

Die Vorrichtung zeichnet sich durch einen geringen Raumbedarf und eine gute Hubverstellung aus.

## Beschreibung

Die vorliegende Erfindung betrifft eine Vorrichtung zum Antreiben eines Greiferbandes, welche Vorrichtung ein räumliches Kurvengetriebe zur Umwandlung einer Drehbewegung in eine Schwingbewegung mit einem die Drehbewegung ausführenden Kurventräger und mit einem die Schwingbewegung ausführenden Steuerhebel, der mit dem Kurventräger in Eingriff ist und eine Webmaschine mit einer derartigen Vorrichtung.

Es ist bekannt mit Hilfe eines Kurbelarmes mit Kreuzgelenk oder mit Hilfe eines räumlichen Kurventriebes die Drehbewegung einer Antriebswelle einer Greiferbandwebmaschine in eine Schwingbewegung für ein Greiferbandrad umzuwandeln, um die Hin- und Herbewegung eines Greiferbandes zu bewirken.

Die hierfür vorgesehenen räumlichen Kurvengetriebe enthalten einen Kurventräger, der die Drehbewegung ausführt und einen Steuerhebel, der mit dem Kurventräger im Eingriff steht und die Schwingbewegung ausführt.

Als Kurventräger eignen sich Nutkurvengloboide oder - hyperboloide, die aber in der Praxis aus Herstellungsgründen als Kurvenzylinder ausgebildet werden.

Derartige Kurvengetriebe haben den Nachteil, dass der Schwingwinkel eingeschränkt ist. Um diesen Nachteil auszugleichen, wird der Durchmesser des Kurvenzylinders entsprechend gross gewählt und die Länge des Steuerhebels verlängert. Diese Massnahmen haben ihrerseits Nachteile und zwar grosse Massen und eine eingeschränkte Hubeinstellung.

Der Erfindung liegt die Aufgabe zugrunde, eine Vorrichtung zum Antreiben des Greiferbandes zu schaffen, bei der der Kurventräger geringere Abmessungen und folglich eine geringe Masse aufweist.

Die mit der Erfindung erzielbaren Vorteile sind im einfachen Aufbau, dem geringen Raumbedarf und einer optimalen Hubverstellung zu sehen.

Eine Greiferwebmaschine mit einem Bandrad und einer Vorrichtung gemäss Anspruch 1 ist erfindungsgemäss dadurch gekennzeichnet, dass die Welle mit dem Bandrad antriebsverbunden ist.

Vorteilhafte Ausführungsformen der Erfindung ergeben sich aus den abhängigen Patentansprüchen 2 bis 11.

Nachfolgend wird die Erfindung anhand der beiliegenden Zeichnungen erläutert. Es zeigen:
- Fig. 1: eine räumliche Darstellung einer ersten Ausführungsform einer erfindungsgemässen Vorrichtung mit einem Bandrad;
- Fig. 2: einen Schnitt entlang der Linie II-II, welcher das Zusammenwirken von Wulstkurve und Steuerhebel aufzeigt;
- Fig. 3A und 3B: eine Anordnung zur Verstellung des Schwingwinkels W;
- Fig. 4: eine Anordnung zur Uebertragung der Schwingbewegung auf ein Bandrad und
- Fig. 5: eine räumliche Darstellung eines Kurvengetriebes einer zweiten Ausführungsform der erfindungsgemässen Vorrichtung.

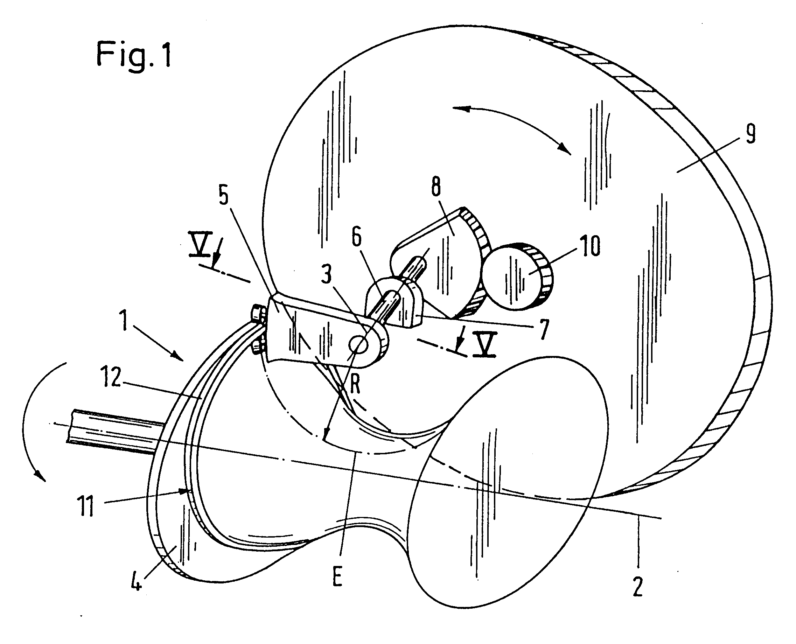

Die Fig. 1 zeigt eine Anordnung zum Hin- und Herbewegen eines Greiferbandes. Die Anordnung enthält ein räumliches Kurvengetriebe 1 miteinander rechtwinklig kreuzender erster und zweiter Drehachsen 2, 3. Das Kurvengetriebe 1 enthält einen Kurventräger 4, der eine Drehbewegung um die erste Drehachse 2 ausführt und einen Steuerhebel 5, der mit dem Kurventräger 4 in Eingriff steht und eine Schwingbewegung um die zweite Drehachse 3 ausführt. Die Anordnung enthält ferner eine Welle 6, die um die zweite Drehachse 3 dreht und die mit dem Steuerhebel 5 starr verbunden ist, ein ortsfest angeordnetes Lager 7 für die Welle 6, ein Zahnsegment 8, das mit der Welle 6 starr verbunden ist, und ein Greiferbandrad 9 mit einem Ritzel 10, das mit dem Zahnsegment 8 kämmt. Der Kurventräger 4 ist ein Rotationskörper, dessen Erzeugende E ein Kreisbogen mit dem Radius R ist, so dass ein Körper gebildet wird, dessen Mantelfläche ein Globoid ist. Auf der Mantelfläche des Kurventrägers 4 ist eine Wulst 11 mit zwei ebenflächigen Flanken 12 ausgebildet, die eine geschlossene Kurve darstellt. Der Kurvenverlauf ist dergestalt, dass eine Umdrehung des Kurvenkörpers 4 um die erste Drehachse 2 eine Schwingbewegung von ca. 180° um die zweite Drehachse 3 zur Folge hat.

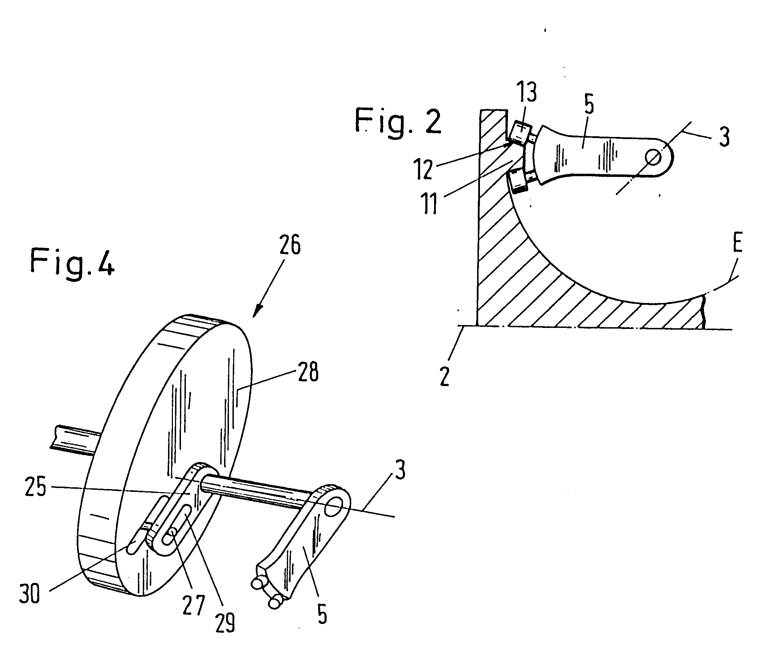

Wie insbesondere aus Fig. 2 ersichtlich ist der Steuerhebel 5 ein einarmiger Hebel, der am freien Ende mit zwei Rollen 13 versehen ist, deren Laufflächen an den Flanken 12 abrollen. Hierzu sind die Rollen 13 im Abstand zueinander angeordnet und deren Lauffläche ist mit Vorteil ballig ausgebildet, um die Laufeigenschaften zu verbessern. Ferner ist es von Vorteil, wenn die Rollen 13 in nicht dargestellte Wälzlager gelagert sind, um die Laufeigenschaften weiter zu verbessern.

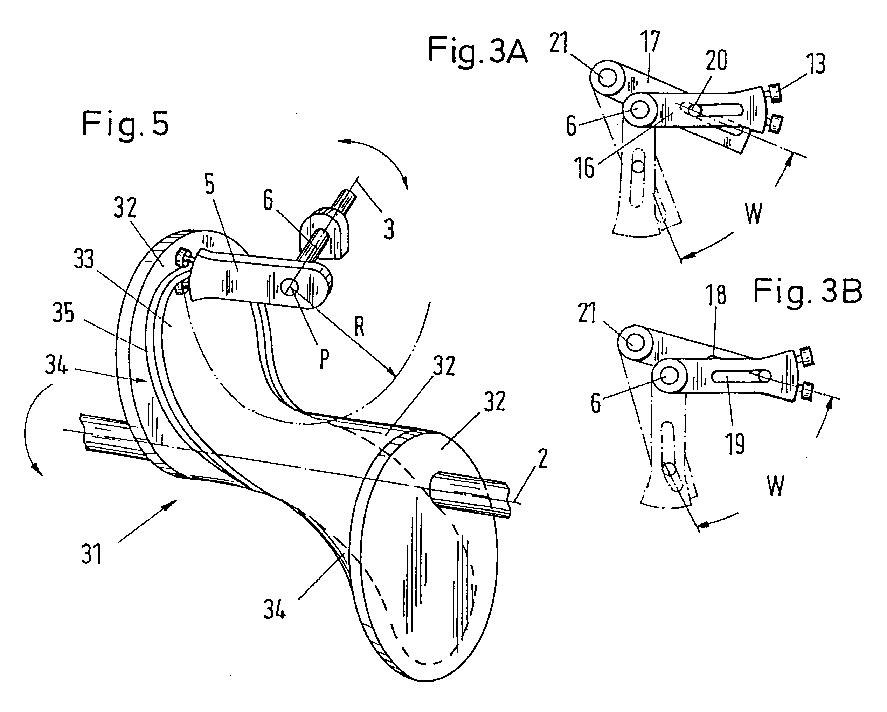

In der in Fig. 1 gezeigten Ausführungsform wird durch eine Umdrehung des Kurventrägers 1 das Bandrad 9 um einen vorbestimmten Drehwinkel hin und her bewegt. Um dieses feste Verhältnis verstellen zu können, wird eine Anordnung vorgesehen, die in den Figuren 3A und 3B dargestellt ist.

Diese Anordnung umfasst einen Steuerhebel 16 mit einem Langloch 17 und einen Stellhebel 18 mit einem Langloch 19, die über einen Führungsstift 20 in Verbindung stehen. Der Führungsstift 20 ist am Stellhebel 18 so angeordnet, dass seine Stellung innerhalb des Langloches 19 einstellbar ist und in das Langloch 17 im Steuerhebel 16 hineinragt. Der Steuerhebel 16 ist mit der Welle 6 starr verbunden und der Stellhebel 18 ist auf einer Achse 21 angeordnet. Wie den Figuren 3A und 3B zu entnehmen ist, kann durch die Einstellung des Führungsstiftes 20 innerhalb des Langloches 19 der Schwenkwinkel W des Steuerhebels 16 verändert werden, weil die Drehachsen des Steuerhebels und des Stellhebels lagefest einander zugeordnet sind.

Die Fig. 4 zeigt eine Anordnung zur Uebertragung der Schwingbewegung auf das Bandrad, die mit einer Einstellung des Schwingwinkels gekoppelt ist. Die Anordnung enthält einen Stellhebel 25 und ein Planetenradgetriebe 26. Der Stellhebel 25 ist an der Welle 6 starr befestigt, die mit dem Steuerhebel 5 verbunden ist und um die zweite Drehachse 3 drehbar ist. Der Stellhebel 25 ist über einen Führungsstift 27 mit dem Hohlrad 28 des Planetenradgetriebes 26 verbunden. Im Stellhebel 25 ist ein Langloch 29 vorgesehen, in dem der Führungsstift 27 einstellbar angeordnet ist. In der Seitenwand des Hohlrades 28 ist eine langlochähnliche Ausnehmung 30 ausgebildet, in welcher der Führungsstift hinragt und geführt ist. Wie in Figuren 3A und 3B gezeigt, kann durch Einstellung des Führungsstiftes 27 innerhalb des Langloches 29 der Schwenkwinkel W eingestellt werden.

Wird auf eine Einstellung des Schwingwinkels verzichtet, so kann der Steuerhebel 5 direkt mit dem Hohlrad 28 verbunden werden.

Die Fig. 5 zeigt räumlich und schematisch dargestellt, die für eine Umwandlung einer Drehbewegung in eine Schwingbewegung erforderlichen Elemente eines räumlichen Kurvengetriebes und zwar einen die Drehbewegung ausführenden Kurventräger 31 und einen die Schwingbewegung ausführenden Steuerhebel 5. Der Kurventräger 31 ist im wesentlichen ein Rotationskörper, dessen Erzeugende ein Kreisbogen ist und bei dem aus Ersparnisgründen überflüssiger Werkstoff weggelassen ist, wobei die Rotationsachse der Erzeugenden die Drehachse des Kurventrägers 31 ist. Der so ausgebildete Kurventräger 31 setzt sich aus zwei Körperabschnitten 32 zusammen, die eine identische Kontur aufweisen und die um 180° zueinander versetzt sind. Der Kurventräger 31 ist symmetrisch und um die Drehachse 2 drehbar. Die Oberflächen der Körperabschnitte 32 weisen jeweils einen Flächenabschnitt 33, die aneinandergrenzen und zusammen eine Fläche bilden, die ein Globoid ist. Auf dieser Fläche ist eine Wulst 34 ausgebildet, die eine geschlossene Kurve darstellt. Der Kurvenverlauf ist dargestellt, dass eine Umdrehung des Kurventrägers um die Drehachse 23 eine Schwingbewegung von ca. 180° um die Schwingachse zur Folge hat.

Der Steuerhebel 3 ist identisch ausgebildet wie der der Vorrichtung, die in Fig. 1 dargestellt ist und wird daher nicht mehr beschrieben. Die Uebertragung der vom Steuerhebel ausgeführten Schwingbewegung auf ein nicht dargestelltes Greiferbandrad erfolgt mit den gleichen Elementen wie bei der in Fig. 1 dargestellten Vorrichtung.

## Patentansprüche

1. Vorrichtung zum Antreiben eines Greiferbandes, welche Vorrichtung ein räumliches Kurvengetriebe zur Umwandlung einer Drehbewegung in eine Schwingbewegung mit einem die Drehbewegung ausführenden Kurventräger und mit einem die Schwingbewegung ausführlichen Steuerhebel, der mit dem Kurventräger in Eingriff ist, dadurch gekennzeichnet, dass der Kurventräger (4, 31) mindestens einen eine geschlossene Kurve bildenden Führungsfläche (11, 34) enthaltenden Oberflächenabschnitt (33) aufweist, dessen Erzeugende (E) ein Kreisbogen ist und dass der Steuerhebel (5) mit der Führungsfläche in Eingriff und mit einer Welle (6) drehfest verbunden ist, deren Drehachse (3) durch den Mittelpunkt der Erzeugenden (E) verläuft.

2. Vorrichtung nach Anspruch 1, dadurch gekennzeichnet, dass der Kurventräger (4) ein Rotationskörper ist.

3. Vorrichtung nach Anspruch 1, dadurch gekennzeichnet, dass die Führungsfläche aus zwei parallel verlaufende Kurvenflanken (12, 35) gebildet ist.

4. Vorrichtung nach Anspruch 3, dadurch gekennzeichnet, dass die Kurvenflanken (12) Begrenzungsflächen einer Nut sind.

5. Vorrichtung nach Anspruch 3, dadurch gekennzeichnet, dass die Kurvenflanken (12, 35) Begrenzungsflächen einer Wulst (11, 34) sind.

6. Vorrichtung nach Anspruch 1, dadurch gekennzeichnet, dass der Steuerhebel (5, 16) ein einarmiger Hebel ist und mindestens einen Rollkörper (13) aufweist, der an der Führungsfläche (12, 35) anliegt.

7. Vorrichtung nach Anspruch 6, dadurch gekennzeichnet, dass der Rollkörper (13) eine zylindrische Lauffläche hat.

8. Vorrichtung nach Anspruch 6, dadurch gekennzeichnet, dass der Rollkörper (13) eine ballige Lauffläche hat.

9. Vorrichtung nach Anspruch 6, dadurch gekennzeichnet, dass der Steuerhebel (5, 16) zwei zueinander beabstandete Rollkörper (13) aufweist.

10. Vorrichtung nach Anspruch 1, gekennzeichnet durch ein Planetenradgetriebe (26) dessen Hohlrad (28) mit dem Steuerhebel (5) drehfest verbunden und dessen Sonnenrad mit einem Bandrad (9) verbundbar ist.

11. Vorrichtung nach Anspruch 1, gekennzeichnet durch eine Hebelanordnung (16 bis 20) zur Einstellung des Schwingwinkels eines Bandrades.

12. Greiferwebmaschine mit einem Bandrad und einer Vorrichtung nach Anspruch 1, dadurch gekennzeichnet, dass die Welle (6) mit dem Bandrad (9) antriebsverbunden ist.
